**Europäisches Patentamt**

(19) **European Patent Office**

**Office européen des brevets**

(11) Veröffentlichungsnummer: **0 064 947**
**B1**

(12) # EUROPÄISCHE PATENTSCHRIFT

(45) Veröffentlichungstag der Patentschrift:
05.12.84

(51) Int. Cl.³: **C 04 B 19/04, C 04 B 43/12**

(21) Anmeldenummer: **82810183.2**

(22) Anmeldetag: **03.05.82**

(54) **Verfahren zur Herstellung eines Verbundwerkstoffes und nach dem Verfahren hergestellter Verbundwerkstoff.**

(30) Priorität: **11.05.81 CH 3029/81**

(43) Veröffentlichungstag der Anmeldung:
**17.11.82 Patentblatt 82/46**

(45) Bekanntmachung des Hinweises auf die Patenterteilung:
**05.12.84 Patentblatt 84/49**

(84) Benannte Vertragsstaaten:
**AT BE CH DE FR GB IT LI LU NL SE**

(56) Entgegenhaltungen:
**DE - A - 2 300 724**
**DE - A - 2 533 007**
**GB - A - 2 007 636**
**US - A - 4 013 749**

**Die Akte enthält technische Angaben, die nach dem Eingang der Anmeldung eingereicht wurden und die nicht in dieser Patentschrift enthalten sind.**

(73) Patentinhaber: **EMPEX MINERAL- UND NATURFASERPRODUKTE AG, 1, chemin de la Résidence, CH-1752 Villars-sur-Glâne (CH)**

(72) Erfinder: **Hascic, Wladimir, Erlaufstrasse 13/8, A-2346 Maria Enzersdorf-Südstadt (AT)**

(74) Vertreter: **Steiner, Martin et al, c/o AMMANN PATENTANWAELTE AG BERN Schwarztorstrasse 31, CH-3001 Bern (CH)**

## Beschreibung

Die vorliegende Erfindung betrifft ein Verfahren zur Herstellung eines Verbundwerkstoffes, wobei aus Faserstoffen, Alkaliwasserglas und Fluat ein Gemenge gebildet und dieses geformt und ausgehärtet wird.

Ein bekanntes Verfahren dieser Art strebt eine sehr kurze Aushärtungszeit an, indem dem Gemisch eine praktisch stöchiometrische Menge an Fluat zugesetzt wird (DE-A Nr. 2300724). Versuche zeigen jedoch, dass eine derart kurze Aushärtezeit gar nicht unbedingt erwünscht und mit erheblichen Nachteilen verbunden ist. Schon bei der Herstellung eines Gemisches aus Fasermaterial steht unter Umständen zu wenig Zeit zur Verfügung, um eine gute Durchmischung und anschliessende Formung des Gemisches zu erlauben, bevor die Aushärtung bereits einsetzt bzw. zu weit fortgeschritten ist. Um die Bildung einer kristallinen, sandartigen Struktur des ausgehärteten Bindemittels zu vermeiden, wird das Fluat fein gemahlen zugegeben. Im Hinblick darauf, dass Fluate giftig sind, ist die Zugabe hoher Mengen gemahlener Fluate unangenehm. Die mechanische Festigkeit ist trotz der hohen Menge an Fluaten nicht sehr hoch, weil keine linear wachsenden Ketten sondern, wie erwähnt, eine sandartige Struktur des $SiO_2$ entsteht. Die Feuerfestigkeit lässt ebenfalls zu wünschen übrig.

Der Erfindung liegt die Aufgabe zugrunde, bei günstigeren herstellungstechnischen Bedingungen hohe mechanische Festigkeit und Feuerfestigkeit zu erzielen. Die Lösung dieser Aufgabe ist im Anspruch 1 umschrieben. Versuche zeigen, dass auch bei unterstöchiometrischen Mengen an Fluat eine vollständige Aushärtung des Bindemittels unter günstigen Bedingungen gewährleistet ist. So können z.B. auf 100 Gew.-Teile Natronwasserglas (Verhältnis $Na_2O$ zu $SiO_2$ = 1 zu 3,5; 40° Bé) 2 bis 5 Gew.-Teile Zinkfluat ($ZnSiF_6 \times 6H_2O$) zugegeben werden. Es erfolgt hierbei die Ausbildung linearer Ketten von Kieselsäuremolekülen, was eine hohe mechanische Festigkeit ergibt. Vorzugsweise kann das Fluat in wässeriger Lösung zugesetzt werden, was nicht nur den Mischvorgang erleichtert, sondern ein klebriges Bindemittelgemisch ergibt, das an den Füllstoffen, insbesondere Faserstoffen, gut haftet bzw. dieselben gut benetzt, was zur hohen Festigkeit des entstehenden Verbundwerkstoffes beiträgt. Der Zusatz unterstöchiometrischer Mengen an Fluat lässt Alkalisilikat frei, das mit dem Metalloxyd oder dem basischen Metallsilikat bei der Erhitzung des geformten Gemisches zu einem höher schmelzenden Silikat umgesetzt wird. Damit kann die Feuerfestigkeit des Verbundwerkstoffes erheblich erhöht werden.

Es ist zwar aus der GB-A Nr. 2007636 auch bekannt, einen Silikatschaum durch Beigabe einer mindestens stöchiometrischen Menge an Fluat auszuhärten und dem Gemisch basische Metallsilikate, z.B. Ton oder Wollastonit, als Füllstoffe zuzusetzen. Es ist jedoch nicht erkennbar oder erkannt, dass es auf die Kombination der Massnahmen ankommt, nämlich eine unterstöchiometrische Menge an Fluat zusammen mit höher schmelzende Silikate bildenden Metalloxyden oder basischen Metallsilikaten zuzusetzen.

Von besonderem Vorteil ist auch die Verwendung von Naturfaserstoffen als strukturaufbauende Komponenten. Es hat sich herausgestellt, dass derartige Faserstoffe sich mit Alkaliwasserglas hervorragend verbinden lassen, was möglicherweise auf die günstige Oberflächenstrukturierung dieser Substanzen zurückzuführen ist. Gleichzeitig vermitteln diese Substanzen aufgrund ihres Fasergehaltes günstige Zugfestigkeitswerte und verhindern auf diese Weise eine Sprödigkeit des Verbundwerkstoffes.

Zur Erzielung bestimmter Eigenschaften kann es zweckmässig sein, auch Gemische verschiedener Naturfaserstoffe zu verwenden.

Aus Gründen der Verarbeitbarkeit und einer vorteilhaften Vernetzungsstruktur hat sich als zweckmässig herausgestellt, wenn das Alkaliwasserglas ein Natronwasserglas mit 35 bis 45° Bé ist. Es hat sich im Rahmen dieser Erfindung weiters als zweckmässig herausgestellt, wenn als Fluate Magnesium-, Kalzium-, Zink-, Aluminium-, Kupfer-, Chrom-, Blei- oder Eisenfluate eingesetzt werden. Auch Gemische dieser Fluate können verwendet werden.

Um günstige Raumgewichte des Verbundwerkstoffes zu erreichen, die wiederum von Bedeutung für die thermische und akustische Dämmung sind, ist es vorteilhaft, wenn der Bindemittelanteil am fertigen Verbundwerkstoff 10 bis 80, vorzugsweise 10 bis 40 Gew.-% beträgt.

Eine optimale Verarbeitungs- und Vernetzungscharakteristik des Alkalisilikates ist dann erreicht, wenn der Fluatanteil, bezogen auf das Alkalisilikat, 1 bis 10, vorzugsweise 4 bis 6 Gew.-% beträgt. Unter 1 Gew.-% Fluatanteil kann zwar bei entsprechender Verlängerung der Härtungszeit noch eine günstige Festigkeit erreicht werden, die Wirtschaftlichkeit des Verfahrens zur Herstellung des Verbundwerkstoffes ist dann aber schon in Frage gestellt. Ein Fluantanteil über 10 Gew.-% weist keine verbesserte Wirksamkeit mehr auf.

Eine optimale Feuerfestigkeit ist erreichbar, wenn das Metalloxyd, das mit dem Alkaliwasserglas bei Hitzeeinwirkung ein höher schmelzendes Silikat bildet, ein Oxyd der Elemente Aluminium, Beryllium oder Titan ist. Insbesondere Aluminiumoxyd hat sich als sehr vorteilhaft herausgestellt. Anstelle des reinen Metalloxydes können auch basische Silikate, z.B. Kaolin, Talkum od. dgl. verwendet werden.

Die Wirksamkeit des Metalloxydes für den Verwendungszweck des Verbundwerkstoffes als Bauelement ist dann besonders günstig, wenn sein Anteil, bezogen auf das Alkalisilikat, 3 bis 25, vorzugsweise 3 bis 15 Gew.-% beträgt. Diese Wirksamkeit kann durch folgende Beispiele belegt werden:

Für alle Beispiele wurde ein gleiches Gemenge von 60 g Perlit mit 60 g Natronwasserglas ($Na_2O$ zu $SiO_2$ = 1 zu 3,5) und 1 g in Wasser gelöstem Zinkfluat verwendet. Diesem Gemenge wurden

wechselnde Mengen von Talk (basisches Magnesiumsilikat) zur Erhöhung der Feuerfestigkeit zugesetzt:

*Beispiel 1:*

Keine Verwendung von Talkum
Abbrandtiefe (15 min Beflammung mit 1000° C Bunsenbrennerflamme): 8 mm + Lunkerbildung

*Beispiel 2:*

Talkumzusatz 3,1 g
Abbrandtiefe 7 mm (zuzüglich Lunkerbildung)

*Beispiel 3:*

Talkumzusatz 6,2 g
Abbrandtiefe 4,5 mm (zuzüglich grossen Rissen).

*Beispiel 4:*

Talkumzusatz 9,4 g
Abbrandtiefe 3,5 mm (Bildung grosser Risse)

*Beispiel 5:*

Talkumzusatz 12,5 g
Abbrandtiefe 2,5 mm (Bildung sehr kleiner Risse)

*Beispiel 6:*

Talkumzusatz 15 g
Abbrandtiefe ca. 2 mm (Bildung sehr kleiner Risse)

Obige Beispiele belegen, dass es tatsächlich durch Zusatz von Metalloxyden oder basischen Metallsilikaten zu einer erheblichen Erhöhung der Feuerfestigkeit kommt, wobei zusätzlich durch die Bildung einer höher schmelzenden Silikatschicht auch die Lunker- und Rissbildung wesentlich unterdrückt wird.

Eine weitere Verbesserung der Feuerfestigkeit kann erreicht werden, wenn als Füllstoffe Sand, Kreide, Blähton, Perlit, Kaolin, Schlacke, Asche, Schaumglasabfälle od. dgl. vorhanden sind. Diese an und für sich unbrennbaren Stoffe verbessern die Feuerfestigkeit nicht nur aus diesem Grund, sondern auch aufgrund ihrer günstigen Wärmekapazität. Besonders zweckmässig ist der Füllstoffgehalt auch für die Herstellung des Verbundwerkstoffes, weil sich mit ihm die Konsistenz des noch ungehärteten Gemenges hervorragend steuern lässt und eine unzweckmässige Agglomeration verhindert werden kann. In diesem Sinne hat es sich als vorteilhaft herausgestellt, wenn der Füllstoffanteil, bezogen auf den fertigen Verbundwerkstoff, 10 bis 80, vorzugsweise 15 bis 30 Gew.-% beträgt.

Ein zweckmässiges Verfahren zur Herstellung eines Verbundwerkstoffes besteht darin, dass Naturfaserstoffe getrocknet, auf eine Länge von 2 bis 4 cm und gegebenenfalls eine Breite von 2 bis 4 mm zerkleinert und mit einer Mischung aus Alkaliwasserglas, Fluat und Füllstoff innig vermengt werden, wonach das Gemenge in Formen gefüllt und unter Anwendung von erhöhtem Druck und erhöhter Temperatur ausgehärtet wird.

Durch die Zerkleinerung der Naturfaserwerkstoffe auf die angegebenen Dimensionen kann eine gute Haufwerkverfilzung erreicht werden, wodurch im ausgehärteten Verbundwerkstoff eine die Festigkeit begünstigende Gerüststruktur gebildet werden kann. Die Streifen werden durch das ausgehärtete Alkaliwasserglas an ihren Berührungsstellen verbunden. Ebenso wie die Erhärtung des Gemenges in einer stehenden Form kann der Verbundwerkstoff auch kontinuerlich verarbeitet werden, beispielsweise indem das Gemenge auf eine sich fortbewegende Bahn, beispielsweise eines Plattenbandes, aufgetragen und darauf ausgehärtet wird. Auf diese Weise können auf besonders wirtschaftliche Weise Baustoffplatten hergestellt werden.

Es ist vorteilhaft, wenn bei Verwendung von halmförmigen Naturfaserstoffen, z.B. Schilf, Stroh, Gras, die Halme längs gespalten werden. Darunter ist zu verstehen, dass das den Halm bildende Rohr geöffnet wird, wodurch das Bindemittel auch auf die ursprüngliche Innenwand des Halmes gelangen kann.

Um günstige mechanische Eigenschaften zu erzielen, ist es zweckmässig, wenn die Erhärtung bei einem Pressdruck von 3 bis 4 kg/cm² und einer Temperatur von 180 bis 200° C während einer Zeitspanne von 7 bis 10 min erfolgt.

Im folgenden wird die Erfindung anhand von Beispielen näher erläutert.

*Beispiel 1:*

21 kg Stroh wird geschnitten und gespalten. Danach wird das Stroh mit 100 kg Natronwasserglas vermengt. Nach gutem Druckmischen werden 23 kg Kaolin, 5 kg in Wasser gelöstes Aluminiumfluat und 24 kg Perlit zugeführt. Nach intensiver Vermengung wird das Gemisch in eine Presse transferiert und mit Druck von 3 kg/cm² bei einer Temperatur von 180° C 7 min ausgehärtet.

Die erhaltene Platte weist ein Raumgewicht von 0,38 g/cm³ auf.

*Beispiel 2:*

20 kg Papierschnitzel (Länge 2 bis 4 cm, Breite 2 bis 4 mm) werden mit 55 kg Natronwasserglas und 10 kg Kaolin vermischt. Parallel dazu wird ein zweites Vorgemisch aus 128 kg Perlit, 80 kg Natronwasserglas, 20 kg Kaolin und 7,5 kg in Wasser gelöstes Zinkfluat hergestellt.

Die beiden Vorgemische werden zusammengemischt und das erhaltene Rohgemisch in einer Presse bei 3,5 kg/cm² Pressdruck und einer Temperatur von 190° C 10 min lang ausgehärtet.

Der erhaltene Verbundwerkstoff besitzt ein Raumgewicht von 0,25 g/cm³.

*Beispiel 3:*

10 kg getrocknetes, geschnittenes und gespaltenes Gras werden mit 30 kg Natronwasserglas, 5 kg Kaolin, 2 kg Perlit und 2 kg in Wasser gelöstem Natriumfluat vermischt.

Das erhaltene Rohgemenge wird in einer Presse bei 4 kg/cm² Pressdruck und 200° C 8 min lang ausgehärtet.

Der erhaltene Verbundwerkstoff weist ein Raumgewicht von 0,8 g/cm³ auf.

## Patentansprüche

1. Verfahren zur Herstellung eines Verbundwerkstoffes, wobei aus Faserstoffen, Alkaliwasserglas und Fluat ein Gemenge gebildet und dieses geformt und ausgehärtet wird, dadurch gekennzeichnet, dass das Gemenge mit einer unterstöchiometrischen Menge an Fluat gebildet wird und ihm ein Silikat bildendes Metalloxyd oder basisches Metallsilikat zugesetzt und es unter Anwendung von erhöhtem Druck und erhöhter Temperatur ausgehärtet wird, wobei das nicht durch Fluat gebundene, freie Alkalisilikat zu einem höher schmelzenden Silikat umgesetzt wird.

2. Verfahren nach Anspruch 1, dadurch gekennzeichnet, dass das Fluat in Wasser gelöst zugegeben wird.

3. Verfahren nach einem der beiden Ansprüche 1 oder 2, dadurch gekennzeichnet, dass auf 100 Gew.-Teile Alkaliwasserglas 2 bis 5 Gew.-Teile Fluat zugegeben werden.

4. Verfahren nach einem der Ansprüche 1 bis 3, dadurch gekennzeichnet, dass Naturfaserstoffe auf eine Länge von 2 bis 4 cm und eine Breite von 2 bis 4 mm zerkleinert werden.

5. Verfahren nach einem der Ansprüche 1 bis 4, dadurch gekennzeichnet, dass das Alkaliwasserglas ein Natronwasserglas mit 35 bis 40° Bé ist.

6. Verfahren nach einem der Ansprüche 1 bis 5, dadurch gekennzeichnet, dass als Fluate Magnesium-, Kalzium-, Zink-, Aluminium-, Kupfer-, Blei-, Chrom- oder Eisenfluate eingesetzt werden.

7. Verbundwerkstoff aus einem durch ein anorganisches Bindemittel zusammengehaltenen Haufwerk von Faserstoffen, dadurch gekennzeichnet, dass das anorganische Bindemittel ein, gegebenenfalls Füllstoffe enthaltendes in Gegenwart einer unterstöchiometrischen Menge an Fluat und eines Silikat bildenden Metalloxydes oder basischen Metallsilikates gehärtetes Alkaliwasserglas ist, wobei das nicht durch Fluat gebundene, freie Alkalisilikat zu einem höher schmelzenden Silikat umgesetzt worden ist und die Faserstoffe Naturfaserstoffe z.B. Papier, Stroh, Heu, Gräser, Moos, Laub oder Schilf sind.

8. Werkstoff nach Anspruch 7, dadurch gekennzeichnet, dass der Bindemittelanteil am fertigen Verbundwerkstoff 10 bis 80, vorzugsweise 10 bis 40 Gew.-% beträgt.

9. Werkstoff nach einem der beiden Ansprüche 7 oder 8, dadurch gekennzeichnet, dass der Fluatanteil, bezogen auf das Alkalisilikat, 1 bis 10, vorzugsweise 4 bis 6 Gew.-% beträgt.

10. Werkstoff nach einem der Ansprüche 7 bis 9, dadurch gekennzeichnet, dass das Metalloxyd ein Oxyd der Elemente Aluminium, Magnesium, Beryllium oder Titan ist.

11. Werkstoff nach einem der Ansprüche 7 bis 10, dadurch gekennzeichnet, dass der Metalloxydanteil, bezogen auf das Alkalisilikat, 3 bis 25, vorzugsweise 3 bis 15 Gew.-% beträgt.

12. Werkstoff nach einem der Ansprüche 7 bis 11, dadurch gekennzeichnet, dass als Füllstoffe Sand, Kreide, Blähton, Perlit, Kaolin, Schlacke, Asche oder Schaumglasabfälle vorhanden ist.

13. Werkstoff nach Anspruch 12, dadurch gekennzeichnet, dass der Füllstoffanteil, bezogen auf den fertigen Verbundwerkstoff, 10 bis 80, vorzugsweise 15 bis 30 Gew.-% beträgt.

## Claims

1. Process for the production of agglomerated material, whereby a mixture of fibrous material, alkali water-glass and fluosilicate is fashioned, said mixture being molded and hardened, characterized in that said mixture is fashioned with a lower than stoichiometrical quantity of fluosilicate, a metallic oxide or a basic metallic silicate forming a silicate being added to said mixture which is then hardened under application of increased pressure and increased temperature, whereby the free alkali silicate which is not bound by the fluosilicate is converted into a higher melting silicate.

2. Process according to Claim 1, wherein said fluosilicate is added being dissolved in water.

3. Process according to one of Claims 1 or 2, wherein 2 to 5 parts in weight of fluosilicate are added to 100 parts in weight of alkali water-glass.

4. Process according to Claim 1, wherein said fibrous material is a natural fibrous material which is reduced to pieces having a length of 2 to 4 cm and a width of 2 to 4 mm.

5. Process according to Claim 1, wherein said alkali silicate is a sodium silicate with 35 to 40° Bé.

6. Process according to one of Claims 1 or 2, wherein as fluosilicates magnesium, calcium, zinc, aluminium, copper, lead, chrome or iron fluosilicates are utilized.

7. Agglomerated material comprised of debris of fibrous material hold together by an organic binding agent, characterized in that said inorganic binding agent is hardened alkali water-glass comprising if required loadings, in presence of a lower than stoichiometrical quantity of a fluosilicate and of a metallic oxide or a basic metallic silicate forming a silicate, whereby the free alkali silicate which is not bound by the fluosilicate has been converted into a higher melting silicate, and said fibrous material being natural fibrous material like paper, straw, hay, grasses, moss, leaves or reed.

8. Composite material according to Claim 7, wherein the amount of said binding agent in the finished composite material is comprised between 10 and 80, preferably between 10 and 40% in weight.

9. Composite material according to one of Claims 7 or 8, wherein the amount of said fluosilicate related to said alkali silicate is comprised between 1 and 10, preferably between 4 and 6% in weight.

10. Composite material according to Claim 7, wherein said metallic oxide is an oxide of aluminium, magnesium, beryllium or titanium.

11. Composite material according to Claim 7, wherein the amount of said metallic oxide related to said alkali silicate is comprised between 3 to 25, preferably between 3 to 15% in weight.

12. Composite material according to Claim 7, wherein sand, chalk, blowing clay, perlite, kaolin, slags, ashes or foaming glass wastes are utilized for said loadings.

13. Composite material according to Claim 12, wherein the amount of loading related to the finished composite material is comprised between 10 and 80, preferably between 15 to 30% in weight.

## Revendications

1. Procédé de fabrication d'une matière agglomérée, dans lequel un mélange de matériel fibreux, de verre soluble alcalin et de fluosilicate est formé, ledit mélange étant moulé et durci, caractérisé par le fait que ledit mélange est formé avec une quantité plus faible que stœchiométrique de fluosilicate, un oxyde métallique ou un silicate métallique basique formant un silicate étant ajouté au mélange qui est ensuite durci, par application de pression augmentée et de température augmentée, le silicate alcalin libre qui n'a pas été lié par le fluosilicate étant converti en un silicate à point de fusion plus élevé.

2. Procédé selon la revendication 1, caractérisé par le fait que ledit fluosilicate est ajouté après dissolution dans l'eau.

3. Procédé selon l'une des revendications 1 ou 2, caractérisé par le fait que 2 à 5 parties en poids de fluosilicate sont ajoutées à 100 parties en poids de verre soluble alcalin.

4. Procédé selon la revendication 1, caractérisé par le fait que ledit matériel fibreux est un matériel fibreux naturel réduit en pièces d'une longueur de 2 à 4 cm et d'une largeur de 2 à 4 mm.

5. Procédé selon la revendication 1, caractérisé par le fait que ledit silicate alcalin est un silicate de soude avec 35 à 40° B.

6. Procédé selon l'une des revendications 1 ou 2, caractérisé par le fait que les fluosilicates de magnésium, de calcium, de zinc, d'aluminium, de cuivre, de plomb, de chrome ou de fer sont utilisés comme fluosilicates.

7. Matière agglomérée comprenant des débris de matériel fibreux tenus ensemble par un agent de liaison inorganique, caractérisé par le fait que ledit agent de liaison inorganique est un verre soluble alcalin durci comprenant si nécessaire des charges, en présence d'une quantité plus faible que stœchiométrique d'un fluosilicate et d'un oxyde métallique ou d'un silicate métallique basique formant un silicate, le silicate alcalin libre qui n'a pas été lié par le fluosilicate ayant été converti en un silicate à point de fusion plus élevé et le matériel fibreux étant un matériel fibreux naturel tel que papier, paille, foin, herbes, mousses, feuilles ou roseaux.

8. Matériau composite selon la revendication 7, caractérisé par le fait que la quantité dudit agent de liaison dans le matériau composite terminé est comprise entre 10 et 80, de préférence entre 10 et 40% en poids.

9. Matériau composite selon l'une des revendications 7 ou 8, caractérisé par le fait que la quantité dudit fluosilicate dans ledit silicate alcalin est comprise entre 1 et 10, de préférence entre 4 et 6% en poids.

10. Matériau composite selon la revendication 7, caractérisé par le fait que ledit oxyde métallique est un oxyde d'aluminium, de magnésium, de béryllium ou de titane.

11. Matériau composite selon la revendication 7, caractérisé par le fait que la quantité dudit oxyde métallique dans ledit silicate alcalin est comprise entre 3 et 25, de préférence entre 3 et 15% en poids.

12. Matériau composite selon la revendication 7, caractérisé par le fait que du sable, de la craie, de l'argile expansée, de la perlite, du kaolin, des cendres, des déchets de verre mousse sont utilisés comme charge.

13. Matériau composite selon la revendication 12, caractérisé par le fait que la quantité de charge dans le matériau composite terminé est comprise entre 10 et 80, de préférence entre 15 et 30% en poids.